# EUROPEAN PATENT APPLICATION

(11) **EP 1 931 153 A2**
(43) Date of publication of application: **11.06.2008**
(21) Application number: 07122049.5
(22) Date of filing: 30.11.2007
(51) Int. Cl.: H04Q 7/26

(54) **System with a device for combining the operation fo GSM phones with internet telephony**

(30) Priority: 04.12.2006 BG 10976106
(71) Applicant: Velev, Ivaylo Emilov, 1137 Pancharevo village (BG)
(72) Inventor: Velev, Ivaylo Emilov, 1137 Pancharevo village (BG)
(74) Representative: Benatov, Emil Gabriel

(57) **Abstract**

The system and device are for a unique connection in/over the Internet (3) using GSM phone/s (9). The device has an input interface (1) with a two-way connection to a computer (2) running an Internet telephony (16) software. The computer is a part of the set of personal computers (2_{PC}) connected over the Internet. The first digital output of this interface is two-way connected to a two-way sound converter (4), whose analogue output and input are connected respectively to the analogue input and output of audio codec (5.1) of standard GSM module (5) with a personal GSM number. The digital output of audio codec (5.1) is two-way connected with the digital information input of GSM microprocessor (5.2). Its information output is two-way connected to the radio transceiver (5.4). The second digital interface output is two-way connected to the first digital input of the GSM microprocessor. The controlling outputs of a control microprocessor (6) are two-way connected to the respective controlling inputs of the interface, sound converter, GSM microprocessor and indicating module (7).

## Description

### TECHNICAL FIELD OF THE INVENTION

The system consisting of device D for combing with GSM mobile phones to work with Internet (Voice over IP) telephony is applicable in the communications sector, especially for universal connection of GSM mobile phones in the Internet

### STATE OF THE ART

The common method of using Internet telephony through some of the protocols Skype, MSN Messenger, Yahoo! Messenger, Google Talk, Internet Buster Internet Discount, Internet Cheap, Gizmo Project, etc. requires for the user to be bounded to the computer. In that case the audio waves generated by the user affect a microphone, which generates analogue signal. Microphone is connected to the sound card of the computer, which converts the analogue signal to digital, after that the digital signal is converted to the format required in order to be sent through internet to one or more computers, where the sound card converts the signal back to analogue and through the connected speakers, delivers wave signal acceptable for the hearing of the users.

This way of use presumes quite limited or no mobility of the users of Internet telephony, as both the microphone and the speakers have to be connected wire/lessly to the computers and in both cases they have to be close to the computer.

Some sort of mobility is achieved by using a portable computer (notebook) connected to the internet. However, the mobile internet access networks have limited coverage.

Greater mobility could be achieved by using smart phones that have operating system, enabling the installation and usage of applications for Internet telephony. These phones appear to be expensive and on the other hand the data channel of GSM network has a lower priority than the voice channel. This makes the usage of the data channel impossible in more heavily loaded GSM cells.

A system combing GSM mobile phones to work with Internet telephony is known [appl. US2006/0233157A1]. It consists of a specialized GSM mobile phones with extra operating system and specialized software for combing the GSM data channel through which is realized the Internet telephony.

Disadvantage of that system is that it is with limited usage due to the following reasons:
- requires customized GSM mobile phones
- requires special operating system
- requires installation of special software in the GSM mobile phone
- has lower reliability in data transfer due to the lower priority
- increased costs

This makes the customized GSM mobile phone and the whole system of quite higher cost.

A similar system combing GSM mobile phone to work with Internet telephony is known [EP1439675A2]. It consists of customized mobile phones of third generation that have factory built-in customized operating system that combines the GSM data channel which carries the Internet telephony. This system has the same disadvantages as the one described above.

The above mentioned sources give idea about devices that combine GSM to realize Internet telephony that is handled through the GSM data channel only.

So far no devices that realize Internet telephony through the voice channel of the GSM network are known.

The task of the invention is to create device combining GSM mobile phones to make Internet telephone calls through the GSM voice channel.

Another task of the invention is to create a system that combines GSM to work with Internet telephony with increased efficiency and quality of the transmission of voice data, as well as, with decreased costs.

### TECHNICAL ESSENCE OF THE INVENTION

The task is being solved by creating a device (D1) for combing the GSM mobile phone to work with Internet telephony that consists of two-way USB input interface to a personal computer, with installed Internet telephony application and internet connection. The personal computer is a part of the World Wide Web. The first digital output of the interface is connected to a two-way sound converter, which analogue input and output are connected to the respectively analogue output and input of an audio codec of a common GSM module with personal GSM number, which digital output 5 is connected to the digital data input of the memory enabled GSM microprocessor in the GSM module. The data output of the GSM microprocessor is connected to the radio transmitter of the GSM module. The second digital output of the interface is connected to the first digital input of the GSM microprocessor. The control outputs of the managing microprocessor are connected to the correspondent control inputs of the input interface, sound converter, GSM microprocessor and indicator's module. The power block is typically connected to all the rest blocks. The GSM module 5 is to connect to a GSM mobile phone 9 through common GSM network 10.

Device D21 for joining GSM mobile phones to work with Internet telephony has m (m=1÷M) sound converters and the same number of GSM modules and correspondent personal GSM numbers. The analogue outputs and inputs of these converters are connected to the analogue inputs and outputs of audio codecs of the common GSM modules through multiplexer, which is connected to the next controlling output of the microprocessor. The connection of each GSM module is for N, where 1<n≤10M, number of GSM phones through the common GSM network. The GSM mobile phones are divided in M access groups, where all the GSM mobile phones within one group has a connection to only to the correspondent GSM module. The number of the GSM mobile pone in every group could be the same or not, and the sum of all GSM mobile phones in all the M groups is equal to N.

In device D3 for joining GSM mobile phones to work with Internet telephony, the analogue output and input of the sound converter are connected respectively to the analogue input and output of the audio codec of the common GSM module through the multiplexer, which additional output and input are respectively connected to the analogue input and output of a common SLIC module for direct connection to the landline telephone with own telephone number and/or to a common landline with common telephone subscriber.

In device D4 for joining GSM mobile phones to work with Internet telephony, the analogue output and input of the sound converter are connected respectively to the analogue input and output of the audio codec of the common GSM module through the multiplexer, which additional output and input are respectively connected to the analogue input and output of a common SLIC module for direct connection to the landline telephone with own telephone number and/or to a common landline with common telephone subscriber.

In devices D51 to D54 for joining GSM mobile phones to work with Internet telephony, the interface is for direct connection to the Internet and the microprocessor has embedded operation system and Internet telephony.

In devices D61 and D62 for joining GSM mobile phones to work with Internet telephony, the two-way sound converter is digital-digital. Its two way digital output is connected directly to the digital data input of the GSM microprocessor.

In devices D71 and D72 for joining GSM mobile phones to work with Internet telephony, the interface is for direct connection to the internet and the microprocessor has embedded operating system and Internet application.

In devices D1, D3 or D2 and D4 for joining GSM mobile phones to work with Internet telephony, a common set of headphones and microphone is connected to the to the sound converter or to at least one of the sound converters 4ₘ.

The system for joining GSM mobile phones to work with Internet telephony, realized through personal computers connected to the internet and consisting of GSM mobile phones logged in a GSM network channel, which network is used to make connection through Internet telephony and in which the GSM mobile phones could be of any generation and the used channel is the voice one. There are a number of identical or different devices D, like D1, D2, D51, D52, D61, D62, D71, D72 for joining GSM mobile phones to work with Internet telephony through the GSM voice channel.

This system for joining GSM mobile phones to work with Internet telephony, where there are a number of some of the devices D like D3, D4, D53, D54 is to realize connection to a landline telephone network as well.

The advantage of the device for joining GSM mobile phones to work with Internet telephony through the GSM voice channel and a system for joining GSM mobile phones to work with Internet telephony is that they ensure increased efficiency and quality of voice data transmission at decreased cost.

### DESCRIPTION OF FIGURES

A detailed explanation of the invention is given by an example shown on the figures below, where:
- fig.1 is a block-diagram of a system with device D1 for joining GSM mobile phone to work with Internet telephony.
- fig.2 is a block-diagram of a system with device D2 for joining multiple GSM mobile phones to work with Internet telephony.
- fig.3 is a block-diagram of a system with device D3 for joining one GSM mobile phone to work with Internet telephony and connection to a landline telephone.
- fig.4 is a block-diagram of a system with device D4 for joining multiple GSM mobile phones to work with Internet telephony, as well as connected to multiple landline telephones.
- fig.5 is a block-diagram of a system with device D51 for joining one GSM mobile phone to work with Internet telephony directly connected to the internet.
- fig.6 is a block-diagram of a system with device D52 for joining multiple GSM mobile phones to work with Internet telephony directly connected to the internet.
- fig.7 is a block-diagram of a system with device D53 for joining one GSM mobile phone to work with Internet telephony as well as connected to a single lanline telephone and is directly connected to the internet.
- fig.8 is a block-diagram of a system with device D54 for joining multiple GSM mobile phones to work with Internet telephony as well as connected to multiple landline telephones and is directly connected to the internet.
- fig.9 is a block-diagram of a system with device D61 for joining one GSM mobile phone to work with Internet telephony through a direct digital connection between the converter and the GSM module.
- fig.10 is a block-diagram of a system with device D62 for joining multiple GSM mobile phones to work with Internet telephony through a direct digital connection between the converter and the GSM module.
- fig.11 is a block-diagram of a system with device D71 for joining one GSM mobile phone to work with Internet telephony through a direct digital connection between the converter and the GSM module and is connected directly to the internet.
- fig.12 is a block-diagram of a system with device D72 for joining multiple GSM mobile phones to work with Internet telephony through a direct digital connection between the converter and the GSM module and is connected directly to the internet.
- fig 13 is a block-diagram of a system for joining GSM mobile phones to work with Internet telephony multitude of identical or different devices D, like D1, D2, D51, D52, D61, D62, D71, D72.
- fig.14 is a block-diagram of a system for joining GSM mobile phones to work with Internet telephony multitude of identical or different devices D, like D3, D4, D53, D54.

### EXAMPLE OF TH INVENTION

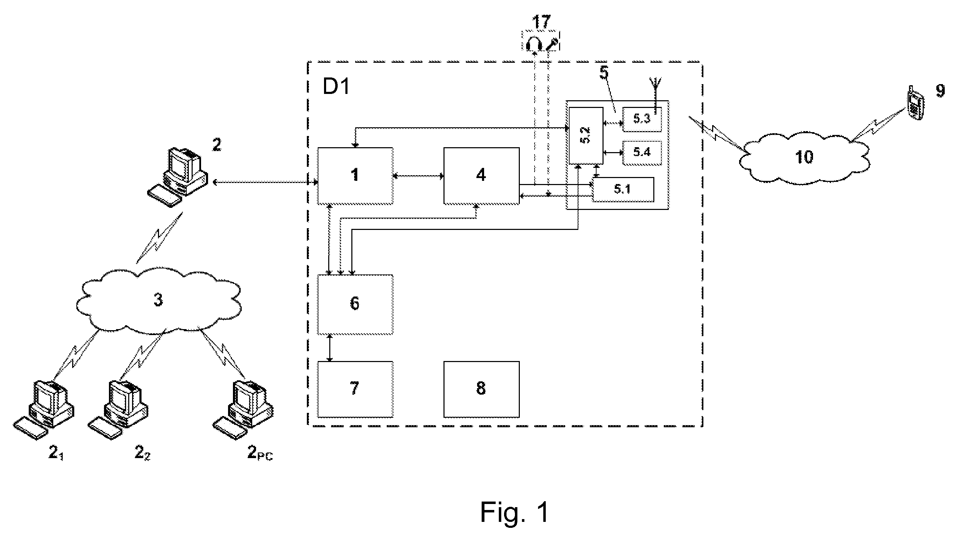

Device D1 (fig.1) for joining GSM mobile phones to work with Internet telephony consists of input interface 1 with USD port for two-way connection to a personal computer 2, with installed application for Internet telephony 16 and connection to the internet 3. This personal computer is a part of the multitude personal computers 2_{PC}, connected to the internet 3. The first digital output of that interface 1 is connected to a two-way sound converter 4, which analogue output and input are respectively connected to the analogue input and output of an audio codec of a common GSM module 5 with personal GSM number, which digital output 5.1 is connected to the digital data input of the memory 5.3 enabled GSM microprocessor 5.2 in the GSM module 5. The data output of the GSM microprocessor 5.2 is connected to the radio transmitter 5.4 of the GSM module 5. The second digital output of the interface 1 is connected to the first digital input of the GSM microprocessor 5.2. The control outputs of the managing microprocessor 6 are connected to the correspondent control inputs of the input interface 1, sound converter 4, GSM microprocessor 5.2 and indicator module 7. The power block 8 is typically connected to all the rest blocks. The GSM module 5 is to connect to a GSM mobile phone 9 through common GSM network 10.

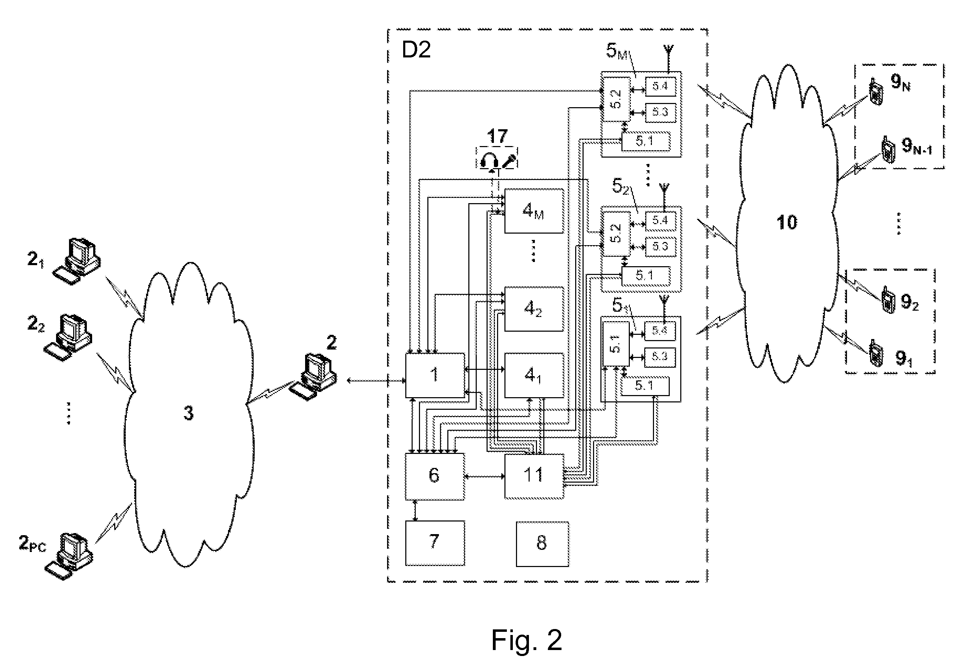

Device D21 (fig.2) for joining GSM mobile phones to work with Internet telephony has m (m=1÷M) sound converters 4 and the same number of GSM modules 5ₘ and correspondent personal GSM numbers. The analogue outputs and inputs of these converters 4ₘ are connected to the analogue inputs and outputs of audio codecs 5.1ₘ of the common GSM modules 5ₘ through multiplexer 11, which is connected to the next controlling output of the microprocessor 6. The connection of each GSM module 5ₘ is for N, where 1<n≤10M, number of GSM phones 9ₘ through the common GSM network 10. The GSM mobile phones 9_{N} are divided in M access groups, where all the GSM mobile phones 9ₙₘ within one group has a connection to only to the correspondent GSM module 5_{m.} The number of the GSM mobile phones 9_{N} in every group could be the same or not, and the sum of all GSM mobile phones in all the M groups is equal to N, where the number M of groups is 1< m ≤ M.

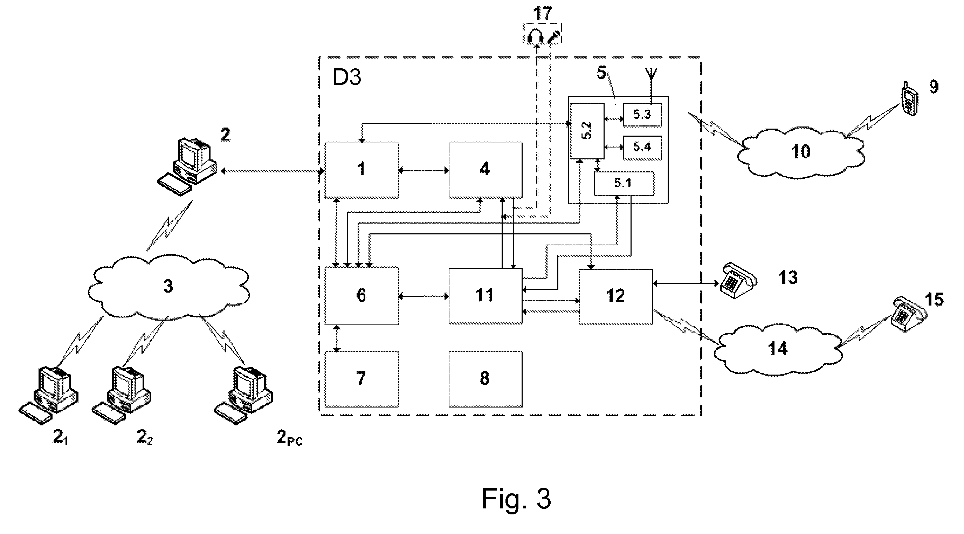

In device D3 (fig.3) for joining GSM mobile phones to work with Internet telephony, the analogue output and input of the sound converter 4 are connected respectively to the analogue input and output of the audio codec 5.1 of the common GSM module 5 through the multiplexer 11, which additional output and input are respectively connected to the analogue input and output of a common SLIC module 12 for direct connection to the landline telephone 13 with own telephone number and/or to a common landline 14 with common telephone subscriber 15 with own telephone number.

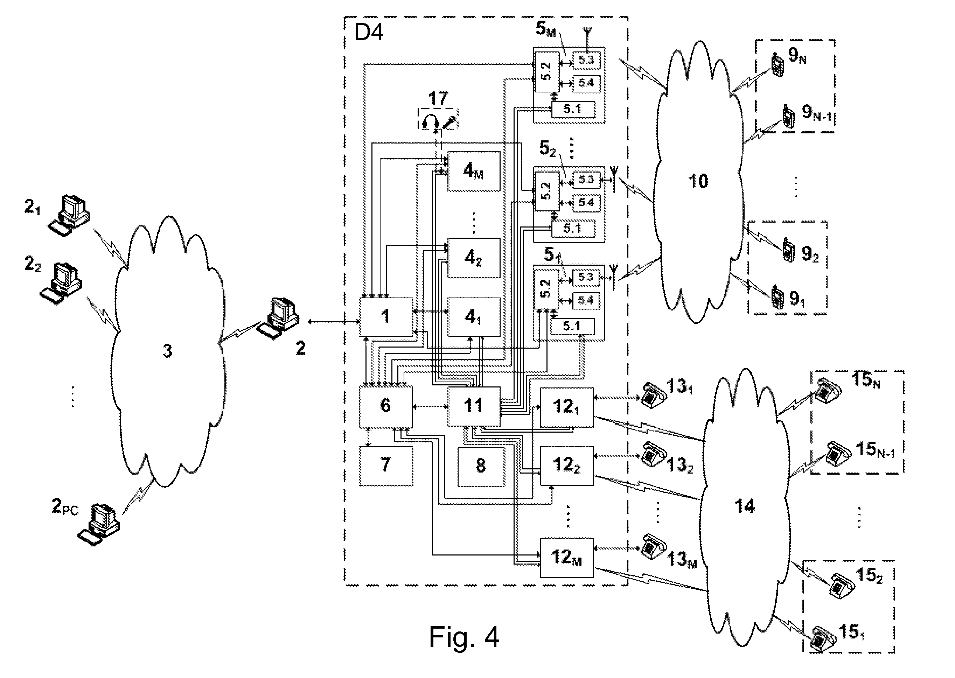

In device D4 (fig.4) for joining GSM mobile phones to work with Internet telephony, the analogue output and input of the sound converter 4ₘ are connected respectively to the analogue input and output of the audio codec 5. 1ₘ of the common GSM module 5ₘ through the multiplexer 11, which additional output and input are respectively connected to the analogue input and output of a common SLIC module 12ₘ for direct connection to the landline telephone 13ₘ with own telephone number and/or to a common landline 14 with common telephone subscriber 15ₙ.

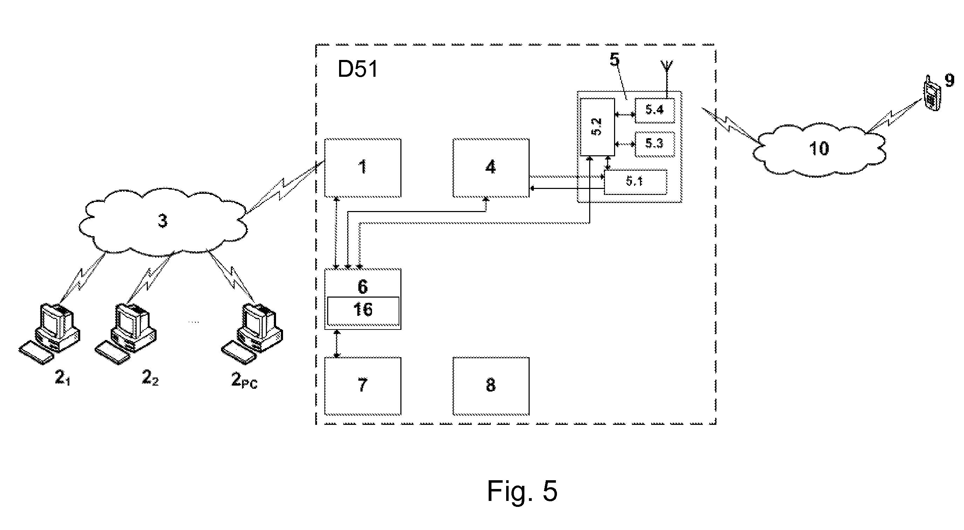

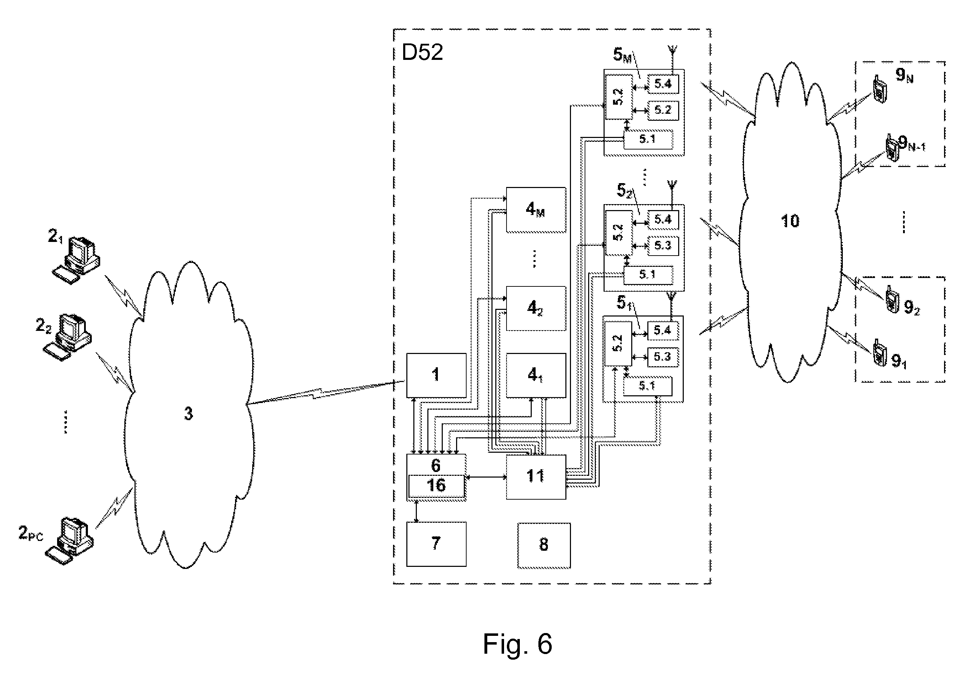

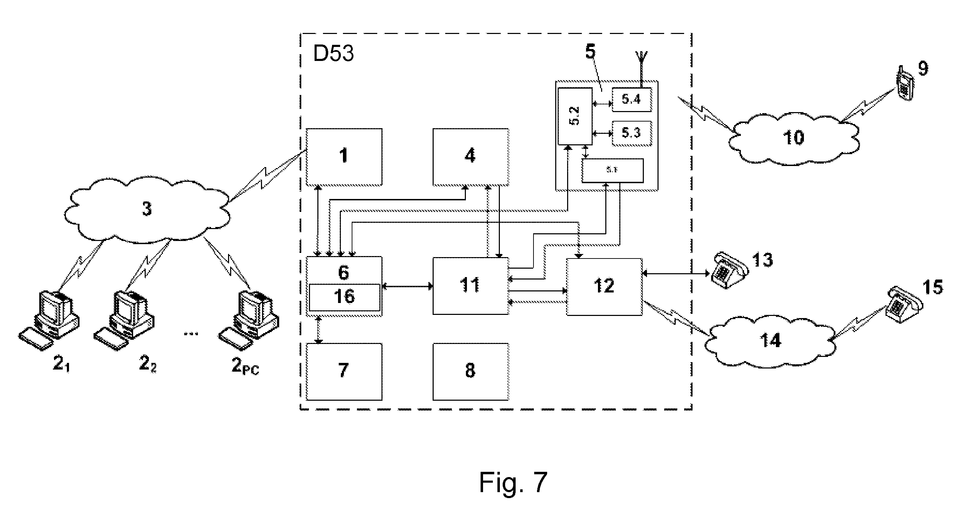

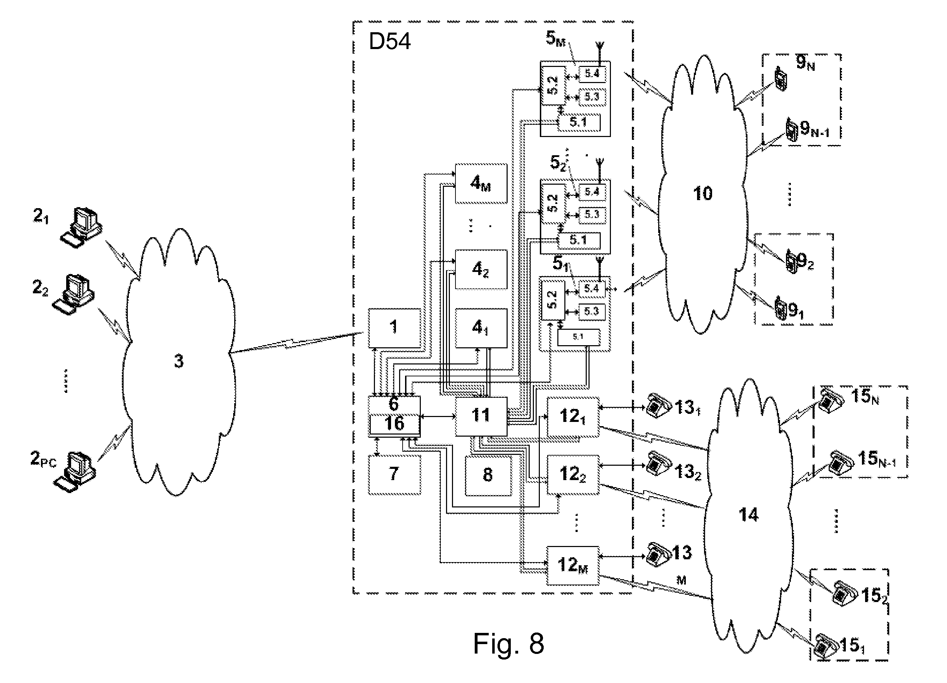

In devices D51 to D54 (fig.5 to fig.8 respectively) for joining GSM mobile phones to work with Internet telephony, the interface 1 is for direct connection to the Internet 3 and the microprocessor 6 has embedded operation system and Internet telephony 16.

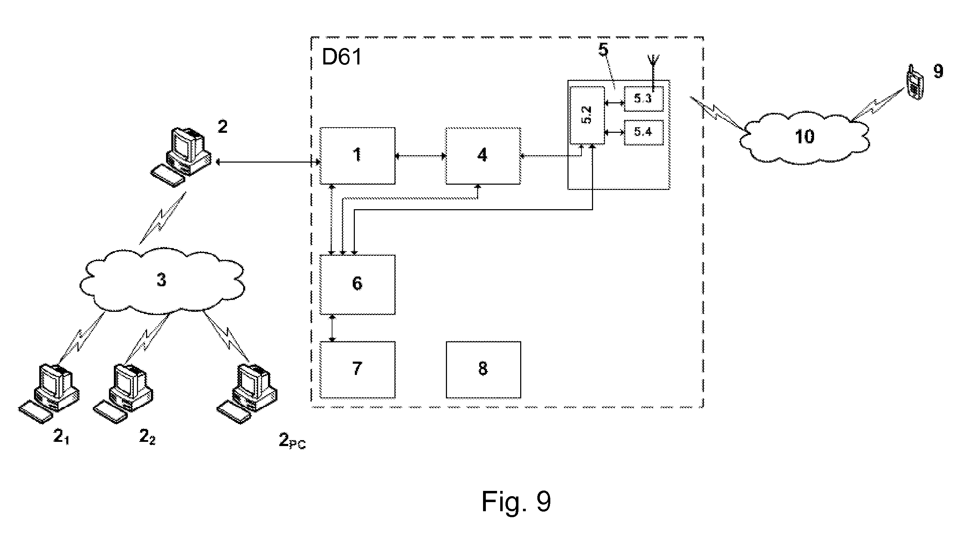

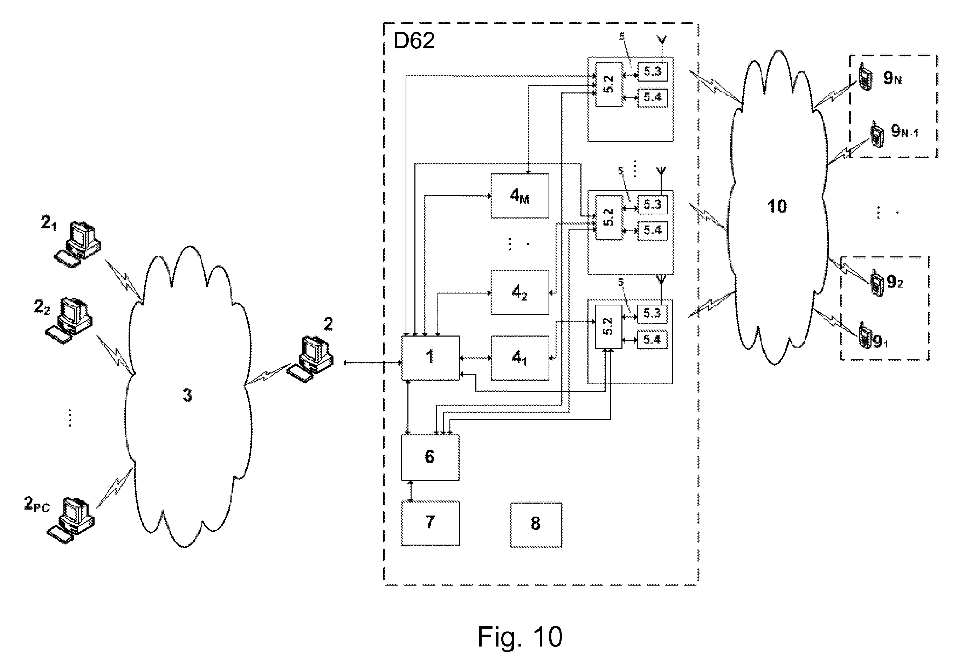

In devices D61 and D62 (fig.9 and fig.10 respectively) for joining GSM mobile phones to work with Internet telephony, the two-way sound converter 4 is digital-digital. Its two way digital output is connected directly to the digital data input of the GSM microprocessor 5.2.

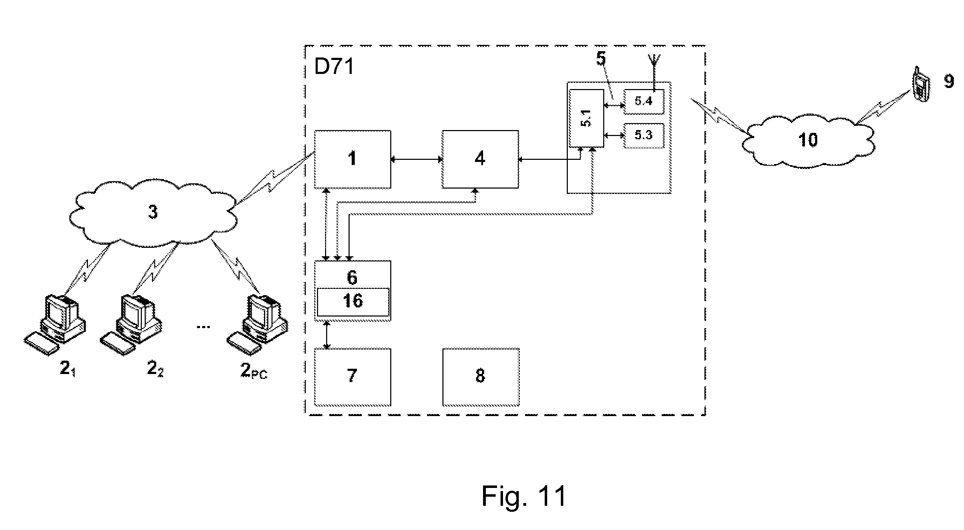

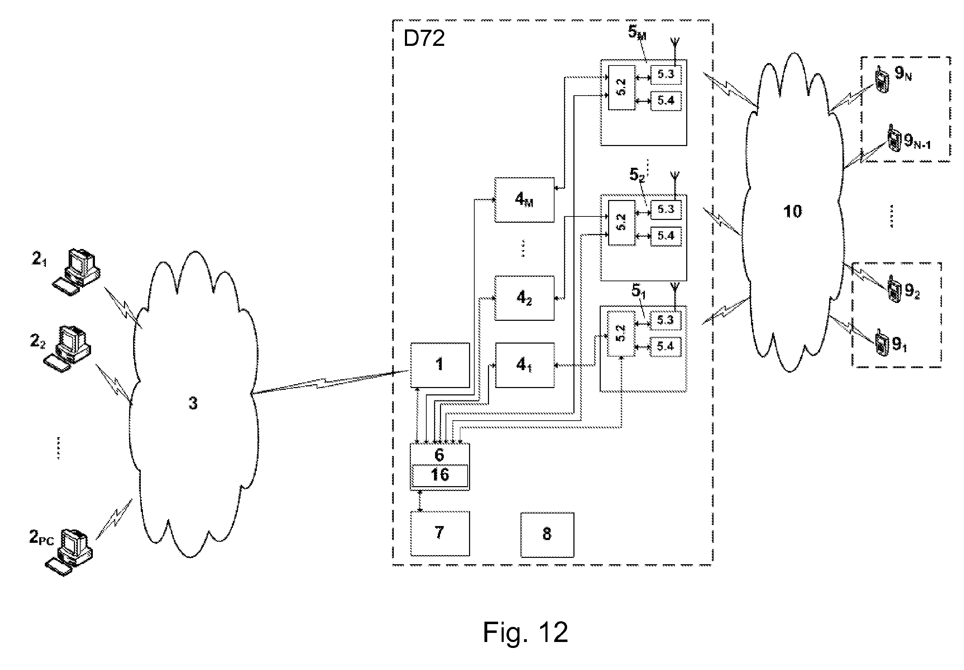

In devices D71 and D72 (fig.11 and fig.12 respectively) for joining GSM mobile phones to work with Internet telephony, the interface 1 is for direct connection to the internet 3 and the microprocessor 6 has embedded operating system and Internet application 16.

In devices D1, D3 or D2 and D4 (fig.1 and fig.3 or fig.2 and fig.4 respectively) for joining GSM mobile phones to work with Internet telephony, a common set 17 of headphones and microphone is connected to the to the sound converter or to at least one of the sound converters 4ₘ.

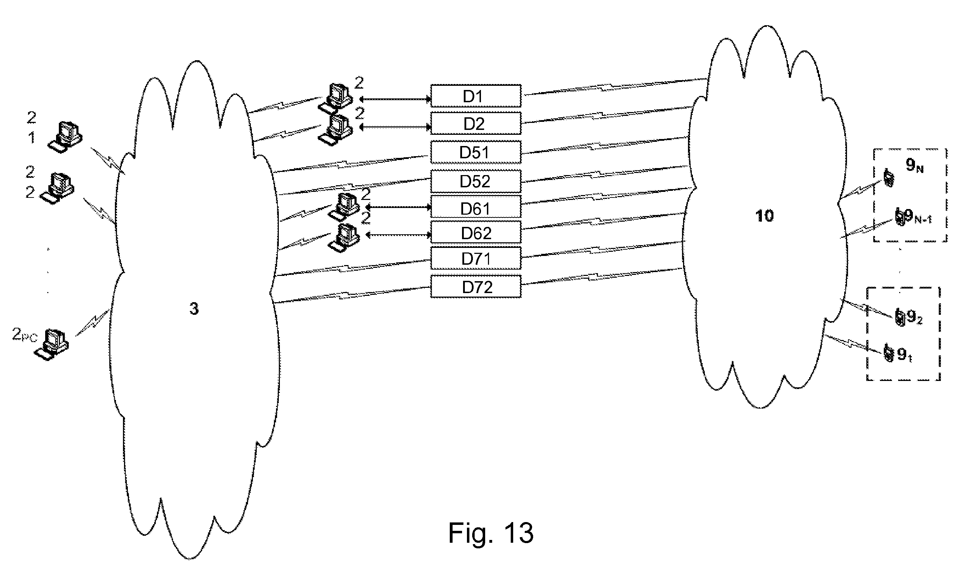

The system (fig. 13) for joining GSM mobile phones 9 to work with Internet telephony 16, realized through personal computers 2_{PC} connected to the internet 3 and consisting of GSM mobile phones 9 logged in a GSM network channel 10, which network 10 is used to make connection through Internet telephony 16 and in which the GSM mobile phones 9 could be of any generation and the used channel is the voice one. There are a number of identical or different devices D, like D1, D2, D51, D52, D61, D62, D71, D72 for joining GSM mobile phones to work with Internet telephony 16 through the GSM voice channel.

This system for joining GSM mobile phones 9 to work with Internet telephony 16, where there are a number of some of the devices D like D3, D4, D53, D54 is to realize connection to landline telephones 13, and landline telephone network as well 15.

### OPERATION OF THE INVENTION

The system with the device combines the operation of GSM phones with Internet telephony and works in the following way:

In order to use the standard GSM phones 9 to make calls over the Internet 3, the sound signal which is transmitted in the specific format of the given Internet telephony protocol (among the protocols Skype, MSN Messenger, Yahoo! Messenger, Google Talk, Internet Buster, Internet Discount, Internet Cheap, Gizmo Project and others) has to be converted into GSM telephony format so it can be transferred to every standard GSM phone. In accordance with the invention, this conversion is performed in the device - in its various modifications - for combining the operation of GSM phones with Internet telephony.

In order to establish a connection between a GSM phone 9 user and an Internet telephony 16 user of a computer from the set of computers 2_{PC}, the GSM phone 9 user dials the personal GSM number of the GSM module 5 in device D1 (fig. 1). Using the GSM network 10 between them, a phone connection is accomplished and a voice communication starts as follows: the GSM phone 9's microphone receives sound waves which are transmitted to the analogue input of the audio codec of GSM phone 9, which itself transforms the signal into digital one and transmits it to the GSM processor of GSM phone 9. Then the data is coded according to the protocols, used in the GSM standard and through the antenna of the radio module of GSM phone 9 is sent through the GSM network 10. With its antenna the radio module 5.3 in device D 1 receives the already sent information and transfers it to the GSM microprocessor 5.2, where the data is decoded and is transferred to the audio codec 5.1. It transforms the signal from digital to analogue. The analogue signal is transferred to the analogue audio input of the voice converter 4 where once again it is digitized so that is can be transferred to computer 2 using the standard interface 1. In computer 2 this signal is converted into the corresponding protocol format for Internet telephony 16 and is transmitted over the Internet 3 to an Internet telephony 16 user of a computer from the set of computers 2_{PC}. In reverse direction the sound waves are received from the microphone of computer 2_{PC} from the set of computers 2_{PC}. Then they are transmitted as analogue signal to the sound card of computer 2_{PC}, where they are digitized, pass through the coding of the given Internet telephony protocol 16 and are sent over the Internet 3. Reaching computer 2, the data is decoded, then using the computer interface 1, it is transferred to the sound conversion module 4 where the data is converted to analogue signal. From the analogue output of the sound conversion 4, it is transferred to the audio codec 5.1 of the GSM module 5 which digitizes them and transfers them to the GSM processor 5.2. There the data is coded in accordance with the protocol for the GSM standard and through the radio module 5.3 and the connected to it antenna, is sent to the GSM phone 9 through the GSM network 10. In there, the data is decoded, converted into analogue signal and through the GSM phone 9 speaker is reproduced as sound.

The microprocessor 6 receives and processes information about the work of the voice converter 4, GSM module 5 and interface 1. At microprocessor 6's request, the indicator block 7 is used to visualize the information for connectivity: in GSM network 10; to the Internet telephony 16; to computer 2. This information is needed during operation time and when setting the device D1. The supplying block 8 feeds the standard required voltage to all modules of the device D1. Since at the initial moment of switching on, the GSM module 5 has a great power consumption, the power supply is fed consecutively with a certain delay to all other blocks at microprocessor 6's command, by the time it establishes a connection with the GSM network 10.

This is how the operation of GSM phones with Internet telephony is combined with increased effectiveness, because the voice channel of the GSM network 10 has a priority over the data channel. This minimizes the risk from lack of communication at increased loading of the GSM network 10.

The quality of voice data transmission is increased, due to the fact that the audio signal is not put under additional transformations in GSM phone 9.

Due to the same reason it is possible to use GSM phones from all generations, including those from lower class with limited capabilities of their microprocessor.

Device D2 (fig. 2) operates in a similar way to the one described for D 1 with the only difference that the possibility of the GSM network 10 to redirect calls when the dialed GSM number is busy, is used. When initially registering the device D2 in the GSM network 10, in each one of its GSM module 5m in the same network is set an option "direct forwarding" i.e. if the dialed GSM number is busy, the GSM network 10 has to forward the call consecutively to the other GSM numbers of the GSM modules 5M until a "free" module 5 is found and a connection is established. Simultaneously the separation of the GSM phones 9_{N} to M groups allows additionally to speed up the realization of the connections. Since the forwarding can start from every GSM module 5_{M}., the GSM phones 9 can be divided evenly in the M groups. A different number of GSM phones 9 can appear in the groups. For example, some of the GSM phones 9 can be the only ones in a group i.e. to have a privilege, and other groups to comprise of more phones. When a call is carried out from a GSM phone 9n to a GSM number of GSM module 5m, its signal gets into the GSM module 5m to which group m it belongs. If at the given moment this GSM module 5m is not connected with another GSM phone 9 from its group, the call is received and the signal is processed as described for D1. Then the analogue input and output of the corresponding audio codec 5.1m connect to the respective audio output and input of any of the sound converters 4m through the multiplexer 11. The multiplexer 6 defines to which of the sound converters 4m it will accomplish this connection through the multiplexer 11. Namely the microprocessor 6 continuously keeps track which of the sound converters 4m are free or busy. Once the connection between the audio codec 5.1m of the GSM module 5m and the sound converter 4m is established, the communication runs in the way described for D1. If during the call the respective GSM module 5m is busy, due to a preliminary set option "forwarding", the GSM network 10 consecutively searches the other GSM modules 5 till an available one is found and the connection is accomplished.

Device D3 operates like D1 with the only difference that when establishing the connection between GSM phone 9 and GSM module 5, the desired call destination is distinguished. If it is a PSTN phone 15, connected to a telephone network 14, to which the SLIC module 12 is also connected, then the microprocessor 6 sends a command to the SLIC module 12 which dials the individual number of the PSTN phone 15. Once a connection between the SLIC module 12 and PSTN phone 15 is established, the microprocessor 6 sends a command to the multiplexer 11, which connects the analogue input and output of the codec 5.1 to the corresponding analogue output and input of the SLIC module 12. Moreover the analogue signal from the output of codec 5.1 is fed to the analogue input of the SLIC module 12 where the signal is converted into the standard format of the telephone network and is sent to the PSTN 15. In the reverse direction the signal from the PSTN phone 15 reaches the SLIC module 12, and then from its analogue output reaches the analogue input of codec 5.1.

In case the call initiated from GSM phone 9 is addressed to a subscriber of another fixed telephone network different from the telephone network 14, then the microprocessor 6 sends a command to multiplexer 11 which connects the analogue input and output of codec 5.1 to the respective audio output and input of the sound converter 4. Then the communication process runs in the way described for D 1.

When a PSTN phone 15 subscriber wants to connect to an Internet telephony 16 subscriber then according to the usual way of making a conversation through the standard telephone network 14, the PSTN phone 15 dials the personal number of fixed telephone 13. Once the connection is established, from PSTN phone 15 one has to dial the connection code through the Internet telephony 16 which is received in microprocessor 6 through the SLIC module 12. Once microprocessor 6 recognizes this code, it sends a command to multiplexer 11 which connects the analogue input and output of the SLIC module 12 to the respective analogue output and input of the sound converter 4. The audio signal received in SLIC module 12 is transferred to multiplexer 11 in analogue form from where it is send to the sound converter 4. Then the communication process runs in the way described for D1.

When a PSTN phone 15 subscriber wants to connect to GSM phone 9, then according to the usual way of making a conversation through the GSM network 10, PSTN phone 15 dials the personal number of fixed telephone 13. Once the connection is established, from PSTN phone 15 one has to dial the connection code through the GSM network 10 which is received in microprocessor 6 through the SLIC module 12. According to the above described method, the microprocessor 6 sends a command to GSM module 5 which dials the individual telephone number of GSM phone 9. Simultaneously the microprocessor 6 sends a command to multiplexer 11 as well, which connects the analogue input and output of the SLIC module 12 to the respective analogue output and input of codec 5.1. The audio signal received in SLIC module 12 is transferred to multiplexer 11 in analogue form from where it is send to the codec 5.1 of the standard GSM module 5. Then the communication process runs in the way described for D 1.

When the connection is between GSM phone 9 and a user 2_{pc} of Internet telephony 16, multiplexer 11 connects the analogue input and output of the sound converter 4 to the respective analogue output and input of codec 5.1 and the communication process runs in the way described for D 1.

When a user wants to establish a connection from fixed telephone 13, which is directly connected to SLIC module 12, then directly from the keypad of fixed telephone 13 he dials the respective code and sends it to microprocessor 6 so that he indicates what kind of call has to be initiated. If the command is to call an Internet telephony 16 subscriber, the microprocessor 6 sends a command to multiplexer 11 so that it connects the analogue input and output of the sound converter 4 to the respective analogue output and input of SLIC module 12. If the command is to call a PSTN phone 15, the audio signal from the fixed telephone 13 is directly transmitted from the SLIC module 12 through the telephone network 14 to PSTN phone 15 without passing through the multiplexer 11.

Device D4 operates in the described for D2 way, and when establishing the connection between the GSM phone 9 and the GSM module 5, the desired destination is distinguished, like the already described for D3 method. An additional operation is that besides tracking continuously the work load of the sound converters 4m, the microprocessor 6 also keeps track of the work load of the telephones 13ₘ to the SLIC modules 12ₘ. When initially installing the numbers of telephones 13ₘ in the telephone network 14, a service "direct forwarding" (when the number is busy) is activated. At an incoming call from a PSTN phone 15n to a busy number 13ₘ, forwarding is performed in a similar way like in D2. The PSTN phones 15n are also grouped in the described for GSM phones 9n way in D2.

Devices D51, D52, D53 and D54 operate in the described way for devices D1, D2, D3 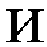 D4 respectively, with the only difference that the digital signal from sound converter 4 is fed to microprocessor 6 which itself has a higher rank and is capable to function with an operating system needed in order to use an Internet telephony 16 software. The microprocessor 6 codes the signal according to the format of the used Internet telephony 16 protocol. Then the coded data is transferred to interface 1 for connecting and sending over Internet. Then the communication process runs in the described way for devices D1, D2, D3 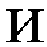 D4 respectively.

Devices D61 and D62 operate in the described way for devices D1 and D2 respectively, with the only difference that after the radio module 5.3 receives the data transferred from GSM phone 9 through the GSM network 10, the data is decoded in the GSM processor 5.2 and then it is sent in digital format to the sound converter 4 which transforms the data in the respective transmission format according to the Internet telephony 16 protocol used. Then the communication process runs in the described way for devices D 1 and D2 respectively. In reverse direction, the data received from computer 2, is sent in digital format to the sound converter 4, which decodes it and resends it again in digital format to the GSM microprocessor 5.2. Then the communication process runs in the described way for devices D I and D2 respectively.

Devices D71 and D72 operate in the described way for devices D61 and D62 respectively, with the only difference that the digital signal from GSM microprocessor 5.2 is fed to microprocessor 6 which codes the signal according to the format of the Internet telephony 16 protocol used. Then the coded data is transferred to interface 1 for connecting and sending over Internet.

When device D1, D3 or D2 and D4 for combining the operation of GSM phones with Internet telephony has a standard connected set 17 of microphone and headsets to the sound converter 4 or at least to one sound converter 4m, then an operator who is located at the place of the device can be involved in the communication. This lets the operator use computer 2 for Internet telephony purposes, for example when fixing or/and setting the device.

The system which combines the operation of GSM phones with Internet telephony (fig. 13) enables GSM phones 9 to be from all generations and the used channel of the GSM network 10 to be the voice channel. This is so because between this voice channel of every GSM phone 9 and the Internet telephony 16, the two-way connected identical or different sets of devices D, namely D1, D2, D51, D52, D61, D62, D71, D72, combine the operation of GSM phones 9 with Internet telephony 16 through the voice channel in the described above method for every single one of them.

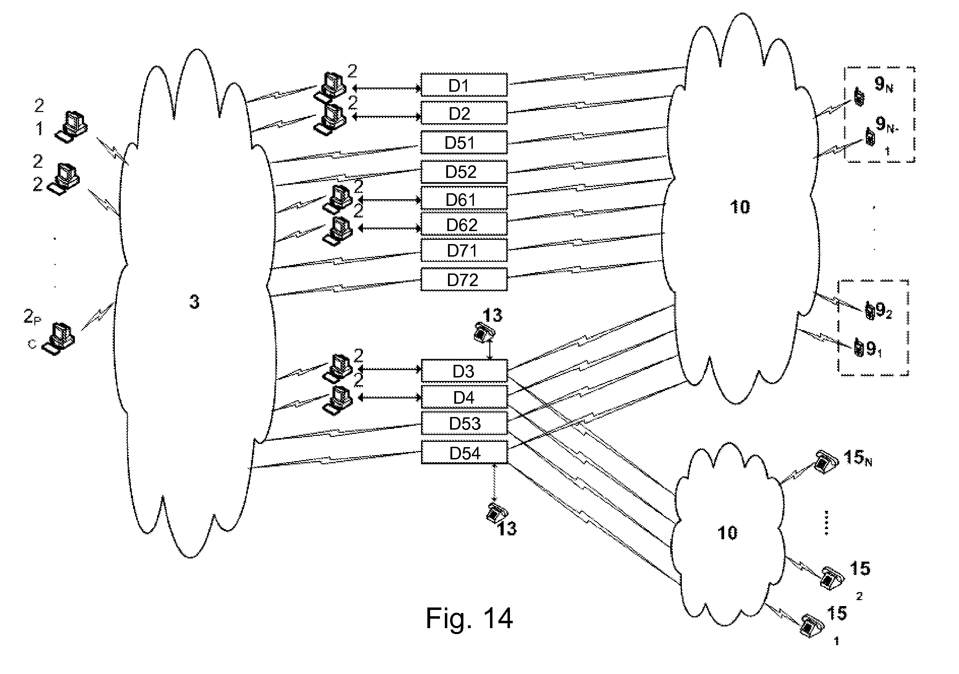

When in the system for combining the operation of GSM phones with Internet telephony (fig. 14), it becomes possible that some of the devices D are and according to claims D3, D4, D53, D54, the system is also used for establishing a connection with fixed telephones 13 and with PSTN phones 15, in the described above method for every device D.

## Claims

1. Device D 1 for combining the operation of GSM phones with Internet telephony, **characterized** with the fact that it consists of input interface 1 with USB port for two-way connection with a personal computer 2, equipped with an Internet telephony 16 software for connection over the Internet 3, which computer is from the set of personal computers 2_{PC}, connected over the Internet 3, as the first digital output of this interface 1 is two-way connected to a two-way sound converter 4, whose analogue output and input are connected respectively to the analogue input and output of audio codec 5.1 of a standard GSM module 5 with personal GSM number. The digital output to which codec 5.1 is two-way connected to the digital information input of the equipped with memory 5.3 GSM microprocessor 5.2 in the GSM module 5 as the information output of the GSM microprocessor 5.2 is two-way connected to the radio transceiver 5.4 of GSM module 5 as the second digital output of interface 1 is two-way connected to the first digital input of GSM microprocessor 5.2 and all the master outputs of master microprocessor 6 are two-way connected to the respective master inputs of the input interface 1, sound converter 4, GSM microprocessor 5.2 and indicator module 7, as supplying block 8 is connected in a standard way to all other blocks and the GSM module 5 is used as a connection with GSM phone 9 through a standard GSM network 10.

2. Device D21 for combining the operation of GSM phones with Internet telephony according to claim 1, **characterized** with the fact that it has m (m = 1 to M) sound converters 4 and the same number of GSM modules 5ₘ with their corresponding personal GSM numbers, as the analogue outputs and inputs of these sound converters 4ₘ are connected to the analogue inputs and outputs of the audio codecs 5.1ₘ of the standard GSM modules 5ₘ through multiplexer 11, which is two-way connected to the next master output of microprocessor 6 and the connection through any of the GSM module 5ₘ is for N, where 1<n≤10M, GSM phones 9ₙ through the standard GSM network 10, as the GSM phones 9_{N} are divided into M access groups as all GSM phones 9ₙₘ in every group have a GSM connection only with the respective GSM module 5ₘ, and the number of GSM phones 9_{N} in the M groups can be the same in all groups, or it can differ as the sum of the number of GSM phones in all M groups equals N and the number of groups M is 1< m = ≤ M.

3. Device D3 for combining the operation of GSM phones with Internet telephony according to claim 1, **characterized** with the fact that the analogue output and input of the sound converter 4 are connected respectively to the analogue input and output of the audio codec 5.1 of the standard GSM module 5 through multiplexer 11, whose additional output and additional input are connected respectively to the analogue input and output of a standard SLIC module 12 for a direct connection with a fixed telephone 13 with an individual telephone number and/or through a standard telephone network 14 with a PSTN phone 15 with individual telephone number.

4. Device D4 for combining the operation of GSM phones with Internet telephony according to claim 2, **characterized** with the fact that the analogue output and input of the sound converters 4ₘ are connected to the analogue inputs and outputs of the audio codecs 5.1ₘ of the standard GSM modules 5ₘ through multiplexer 11, whose additional outputs and additional inputs are connected to the analogue inputs and outputs of the standard SLIC modules 12ₘ for a direct connection to fixed telephones 13ₘ and/or through the standard telephone network 14 with PSTN phones 15ₙ.

5. Device D51 to D54 for combining the operation of GSM phones with Internet telephony according to claims 1 to 4, **characterized** with the fact that the interface 1 is for a direct connection over the Internet 3 and the microprocessor 6 is equipped with an operating system and Internet telephony 16 software.

6. Device D61 and D62 for combining the operation of GSM phones with Internet telephony according to claim 1 or 2, **characterized** with the fact that the two-way sound converter 4 is digital-digital as its two-way digital output is directly connected to the digital information input of GSM microprocessor 5.2.

7. Device D71 and D72 for combining the operation of GSM phones with Internet telephony according to claim 6, **characterized** with the fact that the interface 1 is for a direct connection over the Internet 3 and microprocessor 6 is equipped with an operating system and Internet telephony 16 software.

8. Device D1, D3 or D2 and D4 for combining the operation of GSM phones with Internet telephony according to claims 1 and 3 or 2 and 4, **characterized** with the fact that it has a standard connected set 17 of microphone and headsets to the sound converter 4 or to at least one sound converter 4ₘ.

9. System combining the operation of GSM phones 9 with Internet telephony 16, realized through computers 2_{PC}, connected over the Internet 3, containing GSM phones 9, connected to a GSM network 10, which network 10 is for establishing a connection through the Internet telephony 16, which system is **characterized** with the fact that the GSM phones 9 can be from all generations and the GSM network 10 channel used is the voice channel as between this voice channel on every GSM phone 9 and Internet telephony 16 there are connected two-way sets of identical or different devices D, namely D1, D2, D51, D52, D61, D62, D71, D72, for combining the operation of GSM phones with Internet telephony 16 through the voice channel.

10. System combining the operation of GSM phones 9 with Internet telephony 16, according to claim 9, **characterized** with the fact that when there are also sets and some of the devices D are D3, D4, D53, D54, the system is also used for establishing a connection with fixed phones 13 and with PSTN phones 15.
